# EUROPEAN PATENT SPECIFICATION

(11) **EP 0 401 434 B1**
(45) Date of publication and mention of the grant of the patent: **18.08.1993**
(21) Application number: 89305660.6
(22) Date of filing: 05.06.1989
(51) Int. Cl.: D21H 17/74, D21H 17/36

(54) **Improved creping adhesive formulation**
Klebemitelzusammensetzung
Composition d'adhésif de crépage

(43) Date of publication of application: 12.12.1990
(73) Proprietor: SCOTT PAPER COMPANY, Delaware County, PA 19113 (US)
(72) Inventor: Chen, Patrick P., Sewell New Jersey 08080 (US); Chiu, Taiwoo, Springfield Pennsylvania 19064 (US); Skerrett, J. Richard, Bala Cynwyd Pennsylvania 19004 (US)
(74) Representative: McCall, John Douglas

(56) References cited:
- GB-A- 1 504 374
- GB-A- 2 064 557
- JP-A- 7 959 417
- US-A- 3 498 869

## Description

This invention relates to the manufacture of soft, absorbent tissue paper webs and particularly to formulations for creping such webs to obtain improved softness in the web while increasing operational efficiency.

The creping of paper webs by removing them from a heated surface, usually a rotating drum, with a doctor blade to impart softness to the web is well known in the art. The benefits and difficulties encountered in such a process have been extensively discussed in the prior art, notably Grossman, U.S. Patent 4,063,995, issued December 20, 1977. The creping process depends upon controlling the adhesion of the web to the heated surface. Many adhesive formulations have heretofore been proposed. The present invention relates to creping adhesives which are applied to the creping drum, and more particularly to formulations comprising a water-soluble adhesive. See for example Grube et al, U.S. Patent 4,304,625, issued December 8, 1981, wherein the water soluble component is polyvinyl alcohol. The creping adhesive tends to coat the dryer with a hard and uneven film which builds up as drying and creping proceed, resulting in uneven creping and rapid wear of the creping blade itself. See Grube et al at Col. 2, lines 25-30. In many cases, a cleaning blade is used to scrape the film from the drum surface. These cleaning blades must be changed frequently. Additionally, they cause creping surface wear.

British Patent Application number GB 1504374 discloses a creped laminar tissue and a process and machine for manufacture thereof. The process involves applying an adhesive composition to a creping surface of a paper web and creping that surface. The particular adhesive employed is said not to be particularly important so long as it can be applied in combination with a liquid, the function of which is to transfer the adhesive to the web, wherein the adhesive in its solid form provides the desired strong inter-fibre bands in the surface layer and is soft and thus does not detract from the surface softness required in the finished product.

Japanese Kokai Patent Specification Number JP 79/59417 discloses a process for forming absorbent tissue paper products with fine mesh products. The process involves applying an adhesive composition to a creping surface and creping the web from said surface, the adhesive composition comprising an aqueous solution of an alcohol and sodium phosphate which is described in the examples as being present in a small amount - typically 0.1%.

The present inventors have found that the addition of a polyphosphate salt to the creping adhesive formulation greatly reduces the problem of the hard film build-up on the creping surface. As a result, the creping and cleaning blades need to be changed less often and the creping is more even. The additive of the present invention has utility over the entire moisture range in creping processes. The web, as it approaches the creping surface, can be taken directly from the fordrinier or forming section where it is as "wet" as containing 60-70% water, or it may be as "dry" as having only 3% moisture. Correspondingly, the invention pertains to processes wherein the web, as it leaves the creping surface, contains as much as 35% water to as little as 3%.

If the mill water is "hard" a potassium polyphosphate solution is preferred as it does not precipitate out as readily because of its sequestering power. Such solutions are mixtures of ortho, pyro, tripoly and other higher poly phosphates and K₂O. They are typically sold as proprietary formulations. The potassium polyphosphate solution employed in the examples which follow was Kalipol E-19 sold by ERCO Industries Limited, 2 Gibbs Road, Islington, Ontario M9B 1R1, Canada.

According to the present invention, there is provided a process of treating a paper web which comprises applying an adhesive composition to a creping surface and creping the web from said surface, the adhesive composition comprising a water soluble binder and a polyphosphate salt present in an amount from 1 - 15% by weight of the solids content of the adhesive.

As may be seen from Example II which follows, the adhesive component may be 100% water soluble binder.

The principles, features and advantages of the invention will be further understood upon consideration of the following specific examples.

### EXAMPLE I

A web was formed using a pulp furnish of 70% northern softwood kraft and 30% eucalyptus on a conventional paper machine. The web was formed on a twin wire former and partially dried to a dryness of 75% (25% water by weight) prior to the Yankee section. The web was pressed onto the Yankee cylinder using a pressure roll on which the loading was 35.7 kg per linear cm (200 pounds per linear inch).

The Yankee creping cylinder, having a diameter of 4.5m (15 feet), was coated with a polymer film that provides adhesion between the sheet and the cylinder surface. The polymer material was applied to the cylinder as an aqueous dispersion containing 5% (by weight) polymer solids by means of spraying. The polymer solids was a mixture of 49% (by weight of total solids) high molecular weight (750,000) polyvinyl acetate having a glass transition temperature (Tg) of 27°C; and 49% low molecular weight polyvinyl alcohol and 2% of potassium polyphosphate. The spraying means applied 0.13 grams per square metre of cylinder surface. The creping cylinder was heated using saturated steam at 6.90x10⁵ Pa (100 psi) and the supply of hot air to the hood above the Yankee cylinder was maintained at 232°C (450°F). The Yankee cylinder speed was 982.98m (3225 feet) per minute. The polymer film formed on the dryer at the press roll nip had been heated to a "molten" like visco-elastic state. As the web was pressed onto the cylinder, its average water content was 25%. After the sheet was pressed onto the cylinder it remained in contact with the heated cylinder, reaching a temperature of 93.3°C (200°F) just prior to arrival at the crepe blade. The crepe blade is set such that the creping angle is 15° above the radial line at the point of contact. The creped sheet had a dryness of 96.8% (3.2% moisture) when it came off the creping blade. This creped sheet was calendered to meet the desired bulk specification prior to the reel. The Yankee speed and reel speed was set in such a way that there is a formation of 8% crepe. The web is converted and then rewound into small rolls for consumer use. The physical properties are listed in the following Table.

| | |
|---|---|
| B.W. | 7.8 kg/267.6m² (17.1 lbs/2880 ft²) (Conditioned Weight) |
| Bulk | 609.6 cm/24 sheets (240 in/24 sheet) (after calendaring) |
| | 787.4 cm/24 sheets (310 in/24 sheet) (before calendaring) |
| MDT: | 197.6 g/cm (17.7 oz/in) |
| CDT: | 78.1 g/cm (7.0 oz/in) |
| MDS: | 20% |
| CDS: | 11% |

Including potassium polyphosphate in the Yankee spray chemical system as above described provided a means of coating film control in terms of uniformity and adequate elasticity which allows the adhesion development and commercially feasible creping blade life. During the crepe blade lifetime of more than six hours, it maintained acceptable crepe and smoothness in the creped sheet.

A similar one-ply product was made on the same paper machine with the same process conditions except the spray chemical fluid on the Yankee cylinder did not contain a phosphate salt. A mixture of 50% of high molecular weight polyvinyl acetate (Tg=27°C) and 50% of low molecular weight polyvinyl alcohol was sprayed onto the Yankee cylinder through the same spray configuration. The dryer cylinder coating became uneven (streaked) within 15 minutes of operation. The creped web was full of holes and eventually broke out at the creping blade due to sheet plugging. The Yankee creping blade had to be changed more frequently to maintain coating control. The average creping blade life was 1 hour.

The addition of potassium polyphosphate in the Yankee spray chemical system improved the process in terms of Yankee coating and production stability.

### EXAMPLE II

A web was formed on a conventional fourdrinier papermaking machine using pulps composed of 60% southern softwood kraft, 20% eucalyptus and 20% secondary fibre.

The web was dried on a Yankee cylinder to a dryness of 97% (3% moisture) and removed from the Yankee using a creping doctor blade. A paper web was formed having 6% crepe by controlling the speed differential between the Yankee and a second creping cylinder. The adhesive used on the Yankee was a low Tg polyamine applied at a rate of 0.015 grams per square metre of the Yankee surface.

Web properties after the Yankee were as follows:

| | |
|---|---|
| BW | 6.5 kg/267.6 m² (14.5 lb/2880 ft²) |
| Bulk | 0.343 cm/24 sheets (0.135 in/24 sheets) |
| MDT | 209.8g km (18.8 oz/in) |
| CDT | 104.9 g km (9.4 oz/in) |
| MDS | 12.0% |

The web was then pressed onto a creping cylinder which had a diameter of five feet. The surface of the cylinder was coated with a creping adhesive composite in the form of a polymer film that provides the adhesion between the sheet and the dryer surface. The polymer film material was applied to the cylinder as an aqueous dispersion containing 6.5% polymer solids by means of spraying. The polymer solids comprised a mixture of the following components:
a. 65% High molecular weight polyvinyl acetate with a Tg=32°C
b. 20% low molecular weight polyvinyl alcohol
c. 5% sugar (sucrose)
d. 10% potassium polyphosphate
The spray means applied 0.16 grams per square metre of creping cylinder surface. The creping cylinder was heated with saturated steam at 6.21 x 10⁵ Pa (90 pounds per square inch) gauge. The cylinder surface speed was 838.2 m/min (2750 feet per minute). As the web was pressed onto the cylinder, the average moisture content of the web was 5%.

After the web is pressed onto the cylinder, which is coated with the polymer film, the web and film are heated by the cylinder to 132°C just prior to their reaching the creping blade. The creping blade is set such that the creping angle is 4° above the cylinder radial line at the point of contact. The creped sheet issuing from the creping cylinder was wound at a speed of 2600 fpm resulting in the formation of 8% crepe in the second creping step. The physical properties of the resultant creped paper web are given in the following Table:

| | |
|---|---|
| BW | 7.7 kg/267.6 m² (16.9 lbs/2880 ft²) |
| Bulk | 0.572 cm/24 sheet (0.225 in/24 sheet) |
| MDT | 113.8 g/cm (10.2 oz/in) |
| CDT | 60.36/cm (5.4 oz/in) |
| MDS | 22% |

A similar one-ply product using the same furnish was made on the same paper machine without the invention, using the creping adhesive consisting of:
a. 75% high molecular weight polyvinyl acetate
b. 20% low molecular weight polyvinyl alcohol
c. 5% sugar (sucrose)
The rewound one-ply product had the following physical properties:

| | |
|---|---|
| BW | 7.6 kg/267.6 m² (16.8 lbs/2880 ft²) |
| Bulk | 0.495 cm/24 sheet (0.195 in/24 sheet) |
| MDT | 133.9 g/cm (12.0 oz/in) |
| CDT | 53.6 g/cm (4.8 oz/in) |
| MDS | 20% |

The invention greatly improved the second step creping cylinder coating control in terms of blade life. The average life of the creping blade was 3 hours more than that without the use of the present invention.

## Claims

1. A process of treating a paper web which comprises applying an adhesive composition to a creping surface and creping the web from said surface, the adhesive composition comprising a water soluble binder and a polyphosphate salt present in an amount from 1 - 15% by weight of the solids content of the adhesive.

2. A process as claimed in claim 1, wherein the water soluble binder is polyvinyl alcohol.

3. A creping adhesive composition comprising a water soluble binder and from 1 to 15% of a polyphosphate salt by weight of the solids content of the adhesive.

4. A composition as claimed in claim 3, wherein the water soluble binder is polyvinyl alcohol.

5. A composition according to any preceding claim, wherein the polyphosphate salt is potassium polyphosphate.

## Patentansprüche

1. Verfahren zur Behandlung einer Papierbahn, das die Anwendung einer Klebstoffzusammensetzung auf einer Kreppfläche und Kreppung der Bahn von der genannten Fläche umfaßt, wobei die Klebstoffzusammensetzung einen wasserlöslichen Binder und ein Polyphosphatsalz aufweist, das in einer Menge von 1 - 15 Gew.-% des Feststoffgehaltes des Klebstoffs vorhanden ist.

2. Verfahren nach Anspruch 1, worin der wasserlösliche Binder Polyvinylalkohol ist.

3. Eine Klebstoffzusammensetzung zur Kreppung umfassend einen wasserlöslichen Binder und von 1 bis 15 Gew.-% eines Polyphosphatsalzes bezogen auf den Feststoffgehalt des Klebstoffes.

4. Zusammensetzung nach Anspruch 3, worin der wasserlösliche Binder Polyvinylalkohol ist.

5. Zusammensetzung nach einem der vorhergehenden Ansprüche, worin das Polyphosphatsalz Kaliumpolyphosphat ist.

## Revendications

1. Procédé de traitement d'une feuille continue de papier, qui comprend l'application d'une composition d'adhésif à une surface de crêpage et le crêpage de la feuille continue à partir de ladite surface, la composition d'adhésif comprenant un liant hydrosoluble et un sel polyphosphate présent en une quantité de 1 à 15 % en poids par rapport à la matière sèche de l'adhésif.

2. Procédé tel que revendiqué dans la revendication 1, dans lequel le liant hydrosoluble est un alcool polyvinylique.

3. Composition d'adhésif de crêpage comprenant un liant hydrosoluble et 1 à 15 % d'un sel polyphosphate, en poids par rapport à la matière sèche de l'adhésif.

4. Composition telle que revendiquée dans la revendication 3, dans laquelle le liant hydrosoluble est un alcool polyvinylique.

5. Composition selon l'une quelconque des revendications précédentes, dans laquelle le sel polyphosphate est le polyphosphate de potassium.
